# EUROPEAN PATENT APPLICATION

(11) **EP 4 478 780 A1**
(43) Date of publication of application: **18.12.2024**
(21) Application number: 23179076.7
(22) Date of filing: 13.06.2023
(51) Int. Cl.: H04W 28/24

(54) **A METHOD FOR DETERMINING EFFICIENT QUALITY OF SERVICE, QOS, IN MOBILE COMMUNICATION**

(71) Applicant: Volkswagen Aktiengesellschaft, 38440 Wolfsburg (DE)
(72) Inventor: Pfadler, Andreas, 13357 Berlin (DE); Montero Bayo, Luca, 12049 Berlin (DE)

(57) **Abstract**

The present disclosure concerns a method for determining an effective quality of service, QoS, in mobile communication, the method comprising the steps of: receiving a first QoS indication from a first mobile network operator, MNO, receiving a second QoS indication from a second MNO, translating the first QoS and the second QoS to a uniform format of the QoS, wherein the first QoS and the second QoS are defined according to different QoS models, wherein the first QoS and the second QoS concern the same terminal.

## Description

The present disclosure relates to a method for determining an effective quality of service, QoS, in mobile communication. Particularly, the method is applicable when there are more than one mobile network operators, MNOs, providing mobile communication service to a receiver (or otherwise to a terminal or more generically to a device).

Prior art defines an automated vehicle, also known as an AV, an autonomous vehicle, a self-driving car, a driverless car, a robo-car, or a robotic car, which is a vehicle that is capable of sensing its environment and moving safely with little or no human input.

Further, automotive applications and mobile communications become more and more entangled, particularly due to the increasing interest in automatic driving that requires larger amounts of data when compared to conventional driving. These data amounts are provided partially by the vehicle itself (i.e., by sensors thereof) and partially via an air/radio interface. Via the air interface such as a vehicle to vehicle, V2V, communication or a vehicle to infrastructure, V2I, communication or a vehicle to everything, V2X, communication is carried out, the latter including communication with road side units, RSUs.

In such state-of-the-art systems efficient mobile communication is essential, which depending on a criticality of a particular operation must also meet certain requirements concerning quality of service, QoS.

In this context, for example a 3GPP 5G radio communication system can support demanding QoS requirements of many advanced V2X use cases and their corresponding applications. However, efficient driving, especially of automated vehicles, may be affected by sudden changes of the provided QoS. For that reason, a prediction of QoS changes and early notification of these predicted changes to vehicles recently have been enabled for example by the 3GPP 5G communication systems. This approach enables vehicles to avoid or mitigate effects of sudden QoS changes at application level.

A predicted QoS, pQoS, may for example be used to plan execution of a route or on a lower level to plan a specific maneuver of an AV. If, for example, the pQoS does not meet the requirements long enough, an application will not perform a given action. Typically, applications adapt to a pQoS time series, so that an improved or even optimal target distance planning can be achieved to fully utilize the most out of the predicted QoS feature.

It is already foreseen that AVs will need the support of multiple MNOs. To address the topic of multi MNO architectures, its API, and its challenges the CAMARA project has been started i.e. the "CAMARA: Telco Global API Alliance" aimed at Enabling Seamless Access to Telco Network Capabilities. CAMARA works in close collaboration with the GSMA Operator Platform Group to align API requirements and publish API definitions and APIs.

Different MNOs have distinct networks and also use distinct pQoS models and learning methods to predict the future QoS for user devices such as AVs. As a result, the pQoS profile provided to the user or user's receiver/terminal may vary between different MNOs, which as a result makes a cross MNO prediction a challenge.

It is thus an object of the present disclosure to overcome or reduce at least some of the drawbacks of the prior art and to provide a method for determining an effective quality of service, QoS, in mobile communication. Particularly, when there are more than one mobile network operators, MNOs, providing mobile communication service to a receiver/terminal.

The given task is solved by the subject-matter of the independent claim 1. Advantageous embodiments of the invention can further be gained from the dependent claims and/or optional features of the description.

A first aspect of the invention refers to a method for determining an effective quality of service, QoS, in mobile communication, the method comprising the steps of: receiving a first QoS indication from a first mobile network operator, MNO, receiving a second QoS indication from a second MNO, translating the first QoS and the second QoS to a uniform format of the QoS, wherein the first QoS and the second QoS are defined according to different QoS models, wherein the first QoS and the second QoS concern the same receiver/terminal.

In this context, a QoS model may be a method for determining a QoS and/or a method for reporting QoS. A QoS model may comprise QoS categories (e.g. types of data traffic flows that require congestion management), attributes (e.g. reliability, delay, jitter and bandwidth), and metrics (e.g. throughput, packet loss, signal to noise ratio) containing also the relations between these QoS entities and usually follows a specific structure such as network topology and/or specific network protocols. Therefore, a given QoS model applies its specific QoS metrics and/or its specific method for categorizing data traffic.

The translation aspect of the method is such that the cross-MNO pQoS API may contain a function which provides an effective pQoS (uniform pQoS / common pQoS), meaning a uniform format of the pQoS for all MNOs, e.g. Function: effective-pQoS(pQoS_mno1, pQoS_mno2, ....,pQoS_mnox). As a result, a first translated QoS is obtained from the first QoS and a second translated QoS is obtained from the second QoS, both according to a uniform format of the QoS. Consequently, this advantageously enables a receiver/terminal and/or an application to improve its data management when it uses multiple MNOs.

Preferably, the QoS is a predictive QoS, pQoS. In such a case, a pQoS is a prediction and the corresponding pQoS model applies different approaches to arrive at predicted QoS. Such approaches may include Artificial Intelligence learning models to improve predictions of pQoS. Therefore, predicting the QoS requirements of a receiver/terminal in given circumstances before executing the corresponding services can potentially improve offering the most suitable services. Naturally, pQoS is also based on input parameters, such as environmental parameters of the receiver/terminal, which also may be differently treated by a pQoS model. Therefore, the variety of pQoS models is significant.

The method may be considered as a cross-MNO pQoS API, which may be implemented at different entities. For example, the cross-MNO pQoS may be implemented only at a transmitter or only at a receiver side (which may also be referred to as a user and a backend). In another example, the cross-MNO pQoS may be implemented at an MNO's side, that may be understood as an implementation by one or more of the following: a base station, a radio access network, a core network, the Internet global network. The examples indicated above may also be combined in a suitable system.

Having a common understanding of different pQoS indications available from different MNOs advantageously allows to efficiently configure an application of a receiver/terminal thereby often reducing a number of adaptations of the application operation due to a mismatch between a pQoS of different MNOs and/or a mismatch of different pQoSs and actual QoS.

Preferably, according to any of the previously presented aspects, the uniform format of the QoS is terminal-dependent.

For example, the cross-MNO pQoS determining module may consider receiver/terminal type while determining the uniform pQoS. The receiver/terminal type may concern the receiver's/terminal's hardware and/or software capabilities (e.g. compliance, certifications). By having terminal-dependent common pQoS, as translated by the pQoS managing module, it may remain tailored while still providing advantages of having a cross-MNO pQoS indication.

Preferably, according to any of the previously presented aspects, the uniform format of the QoS is usage-scenario-dependent. For example, the cross-MNO pQoS determining module may consider usage-scenario while determining the uniform pQoS. The usage-scenario type may concern the receiver's//terminal's movement path, and/or time and/or environmental considerations such as weather, speed, congestion. By having usage-scenario-dependent common pQoS, as translated by the pQoS managing module, it may remain tailored while still providing advantages of having a cross-MNO pQoS indication.

Preferably, according to any of the previously presented aspects, the translating process is learned by receiving from the receiver/terminal feedback including indication of a delta between the pQoS and an actual QoS for each of the first MNO and the second MNO.

In a static environment the translation process may be predefined. However, it may also adapt to current states of the system and/or the receiver/terminal (application). The adaptation may be based on feedback on a difference between the pQoS and the actually experienced QoS by a given receiver/terminal/application. For example a given range of SNR reported as a first QoS from a first MNO is initially translated to a throughput range 4. However, after an application provided feedback that actually the throughput experienced was not matching the throughput range 4, the translation module may adapt the translation mapping so that the given range of SNR reported as a first QoS from the first MNO is thereafter translated to a throughput range 3. Consequently, as an advantage the translation process may be improved.

Preferably, the translating process is learned by analyzing a correlation between a feature of the first pQoS and a feature of the second pQoS.

The process of correlating different methods of expressing pQoS may be based on identifying a link between the received QoS metric and a translated QoS metric to learn such links for subsequent mapping/translation. For example: the first MNO provides an SNR range according to its pQoS profile and the second MNO provides a throughput according to its pQoS profile. The user's application may request to be provided with a throughput-based pQoS. In such a case, the SNR can be translated to throughput after determining how different SNR ranges of the first MNO map to different throughputs. Also, even though the second MSO provides a throughput as its pQoS profile, the throughout ranges provided by the first MSO may differ from the throughput ranges used and requested by the user's application.

A link may be found between such different metrics by observing how different applications react to the executed translations. Consequently, as an advantage, the translation process may be improved.

Preferably, according to any of the previously presented aspects, the translating process is learned by executing one or more test sequences using the first MNO and the second MNO and analyzing a correlation between a feature of the first pQoS and a feature of the second pQoS in view of results of the test sequences.

Preferably, such test sequences the same test requests submitted to the same receiver/terminal /application via different MNOs. Parameters of responses of such one or more test sequences may be measured and correlated with pQoS (preferably the common pQoS). For example after a test sequence, the pQoS managing module is aware that according to Metric 1, pQoS / QoS level 3 was achieved using MNO 1 and the MNO 1 reported a pQoS, Metric 2, Level 4. From that the pQoS managing module may infer that MNO 1, pQoS Metric 2, Level 4 may be mapped to Metric 1, common pQoS / QoS level 3 (which may be learned by observing reactions to the one or more test sequences). When executed for all available MNOs, such test sequences advantageously allow for defining a mapping correspondence, such as a mapping table, between different metrics of different MNOs to different metrics of the common pQoS.

Preferably, said correlation is based on determining a first measured service value for the feature of the first pQoS and a second measured service value for the feature of the second pQoS and correlating the feature of the first pQoS and the feature of the second pQoS according to a ratio between the first measured service value and the second measured service value, wherein the first measured service value and the second measured service value are of the same type.

In this example different metrics of different MSO's pQoS may be correlated to one another by linking them to a separate metric of a given type. For example when the metric reported by an MNO is yet unknown to the pQoS managing module or is not supported by the common pQoS format, it may be mapped to the metric of the common pQoS format. When two different pQoS metrics are present from two different MNOs, a ratio between these two metrics may be identified and stored in the pQoS managing module. Consequently, the different metrics of different MSO's pQoS may be linked to each other by a ratio or a mathematic equation such as a linear dependence equation.

Preferably, according to any of the previously presented aspects, the QoS is qualitative. One example of a qualitative QoS is 1, 2, 3, 4, 5 while another example is poor, average, good, very good. Such indications may usually be meaningful in a context. Such an approach to pQoS has an advantage of including consideration of high-level indications of QoS.

Preferably, according to any of the previously presented aspects, the QoS is quantitative. One example of a quantitative QoS is a specific value of a property such as latency in ms, throughput UL/DL in MB/s, SNR. Such an approach to pQoS has an advantage of including consideration of low-level indications of QoS.

Preferably, according to any of the previously presented aspects, the translated first pQoS and the translated second pQoS are provided to the receiver/terminal.

This serves a purpose of a receiver/terminal feedback on the received pQoS and/or informing the receiver/terminal about the pQoS. Typically a receiver/application will request pQoS from an MNO according to an expected format, which is preferably the common pQoS format of the present disclosure. In response, each MNO that may server the receiver/application will provide its own pQoS, which is preferably translated to the common pQoS in order to advantageously allow easy comparison between pQoS of different MNOs. As a result of such comparison the receiver/application may decide to select a serving MNO or to switch a current MNO.

Preferably, according to any of the previously presented aspects, the translated first pQoS and the translated second pQoS are provided to a backend.

A backend is a managing module of the automated vehicles and therefore is interested in being informed about service conditions. This information provides the advantage of being useful for example for planning sessions of automated driving by a control center.

Preferably, according to any of the previously presented aspects, the first MNO and the second MNO operate heterogeneous networks.

In one example, heterogeneous networks include interconnected nodes and different types of links, which may operate according to different principles and/or different protocols. As another example, Internet of Things loT devices are constrained devices that are heterogeneous in terms of their communication protocols and/or device data formats and/or technologies.

Preferably, according to any of the previously presented aspects, the QoS model depends on QoS determination method and/or QoS reported one or more indications.

Due to the fact the QoS determination methods differ, especially in case of pQoS, a QoS model takes into account selected, different input aspects in order to output a QoS (pQoS). Selection of such inputs is implementation dependent. Also since QoS/pQoS models are frequently Al-based, a state of such a QoS/pQoS model depends on its operation history i.e. even if the starting models of two MNOs are the same, after the learning processes the current models of these MNOs may differ. The QoS/pQoS reported one or more indications refer to the reported QoS/pQoS metrics such as the qualitative and/or quantitative metrics identified above. This aspect has an advantage of differentiating QoS models depending on their internal operation as well as depending on types of output reports indicating QoS metrics.

Preferably, according to any of the previously presented aspects, the method further comprising a step of selecting the first MNO or the second MNO to provide a service depending on the translated first pQoS and the translated second pQoS or switching between the first MNO or the second MNO depending on the translated first pQoS and the translated second pQoS.

When an application of a user's terminal that requests information on QoS/pQoS is informed accordingly, it may adapt its operation or maintain current operation based on easily comparable QoS/pQoS information, which advantageously improves operation of applications that take into consideration QoS/pQoS. Since MNO selection/switch is based on more informed process, this may lead to reductions of application adaptations, which are overall beneficial for perceived quality of experience by end users.

A second aspect of the present invention is a device comprising a processor adapted to perform all the steps of the method of the first aspect of the present disclosure according to any variants thereof presented above.

A third aspect of the present invention is a computer program comprising instructions which, when the program is executed by a computer, cause the computer to carry out all the steps of the method of the first aspect of the present disclosure according to any variants thereof presented above.

A fourth aspect of the present invention is a computer-readable storage medium comprising instructions which, when executed by a computer, cause the computer to carry out all the steps of the method of the first aspect of the present disclosure according to any variants thereof presented above.

Such computer programs are typically executed by utilizing the computing resources in a computing device e.g. a processor or a controller. Applications are stored on a non-transitory medium. An example of a non-transitory medium is a non-volatile memory, for example a flash memory while an example of a volatile memory is RAM. The computer instructions are typically executed by a processor. These memories are exemplary recording media for storing computer programs comprising computer-executable instructions performing all the steps of the computer-implemented method according the technical concept presented herein.

The different embodiments of the invention described herein may be advantageously combined unless the contrary is indicated herein.

### Brief description of the figures

Reference is now made to the following figures, in order to describe preferred embodiments of the invention in more detail.
- Figure 1: illustrates a top-level example of arriving at a common pQoS;
- Figure 2: illustrates an example of mapping from two input metrics to an output metric;
- Figure 3: illustrates an exemplary diagram of a system according to the present disclosure; and
- Figure 4: illustrates a block diagram of the method according to the present disclosure.

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

As utilized herein, the term "example" means serving as a non-limiting example, instance, or illustration. As utilized herein, the terms "for example" and "e.g." introduce a list of one or more non-limiting examples, instances, or illustrations.

As used herein, the term "and/or" includes any and all combinations of one or more of the associated listed items. Further, the use of "may" when describing embodiments of the present invention refers to "one or more embodiments of the present invention." Further, in the following description of embodiments of the present invention, the terms of a singular form may include plural forms unless the presented context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention. As used herein, the term "and/or" includes any and all combinations of one or more of the associated listed items and expressions such as "at least one of" when preceding a list of elements, modify the entire list of elements.

Reference will now be made in detail to embodiments which are illustrated in the drawings. Effects and features of the exemplary embodiments will be described with reference to the accompanying drawings. Therein, like reference numerals denote like elements, and redundant descriptions are omitted. The present invention, however, may be embodied in various different forms, and should not be construed as being limited to only the illustrated embodiments herein. Rather, these embodiments are provided solely as examples for fully conveying the aspects and features of the present invention to those skilled in the art.

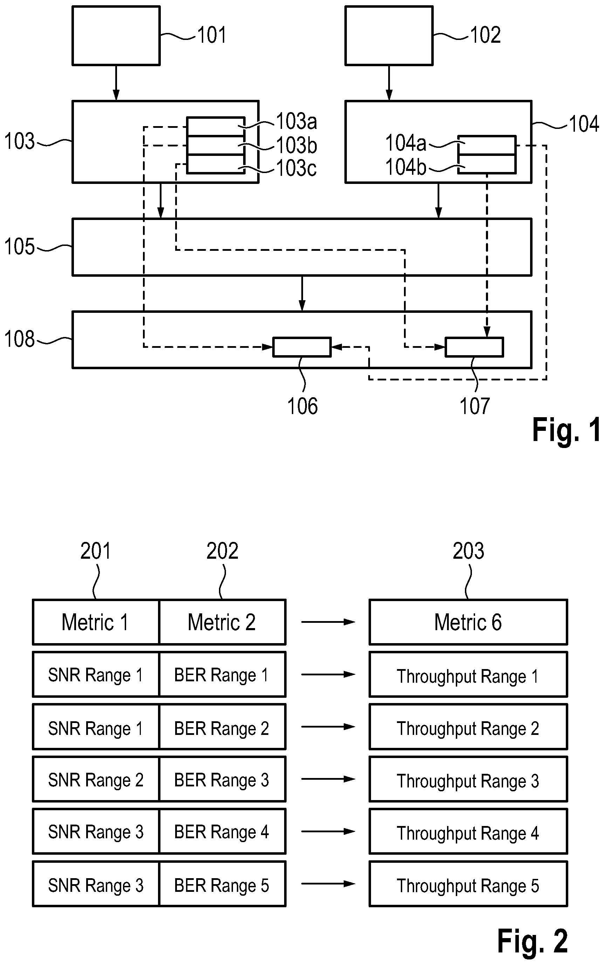

Figure 1 illustrates a top-level example of arriving at a common pQoS. Although the example refers specifically to pQoS, it is also applicable to generic QoS.

In this example a first pQoS model 101 and a second pQoS model provide input to the cross-MNO API (105) (a pQoS translation module in general). It is to be understood that there may be more than two pQoS models present that provide corresponding inputs.

The cross-MNO API 105 receives input 103, 104 from each of the pQoS models 101, 102. The input 103 of the first pQoS model 101 comprises three metric parameters of the first pQoS i.e. Metric 1, Metric 2 and Metric 3 (103a to 103c). Additionally, the input 104 of the second pQoS model 102 comprises two metric parameters of the second pQoS i.e. Metric 4 and Metric 5 (104a, 104b).

After analysis of the received inputs 103, 104 from each of the pQoS models 101, 102, the cross-MNO API 105 may determine that a combination of Metric 1 and Metric 2 of the pQoS input 103 may be mapped to the Metric 6 of the pQoS common format. Based on a predetermined translation scheme 105, the values of Metric 1 and Metric 2 may be mapped to a value of Metric 6 106 for the first pQoS input 103. In this case it may be the case that the value of Metric 2 helps to map the value of Metric 1 to Metric 4. Correspondingly, the value of Metric 4 may be mapped to a value of Metric 6 for the second pQoS input 104.

In a similar manner, the cross-MNO API 105 may determine that the value of Metric 3 may be mapped to a value of Metric 7 107 for the first pQoS input 103. Correspondingly, the value of Metric 5 may be mapped to a value of Metric 7 for the second pQoS input 104.

A pQoS common report 108 comprises the Metrics 6 and 7 separately for both the pQoS output 1 and pQoS output 2 of the respective MNOs.

Depending on system settings, the cross-MNO API 105 may be applicable on a case-by-case basis i.e. locally mapping the input pQoS values into a common pQoS format (this may also be considered as per application common pQoS), however the cross-MNO API 105 may be applicable on a global scale i.e. always providing the same common format of pQoS for all cases of a given communication system.

In other scenarios, the uniform (common) format of the pQoS is receiver-dependent or the uniform format of the pQoS is usage-scenario-dependent.

Figure 2 illustrates an example of mapping from two input metrics to an output metric. The Metric 1 and Metric 2 are exemplary only and refer to SNR and BER. For example a given range of Metric 1, i.e. SNR Range 1, may in view of a given range of Metric 2, i.e. BER Range 1, be translated to Throughput Range 1.

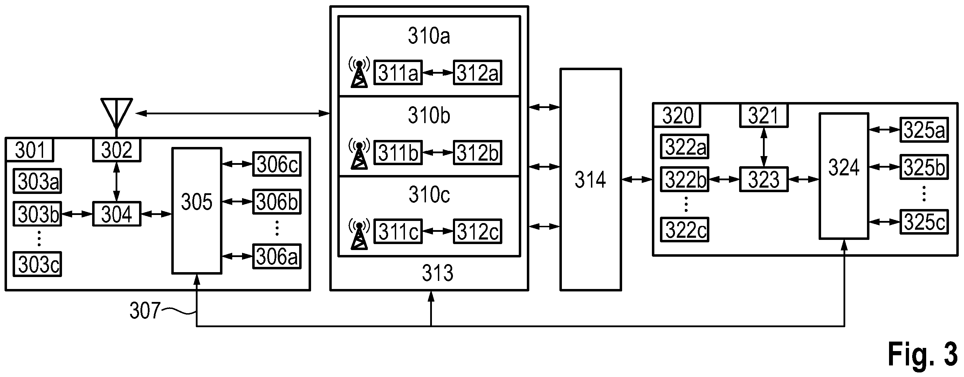

Figure 3 illustrates an exemplary block diagram of a communication system according to the present disclosure.

There are three main components of the system that are a user, which is a user's terminal/receiver 301, one or more servers/systems of different MNOs 310a to 310c, a backend 320.

The user's terminal 301 executes one or more applications 303a to 303c (such as a tele-operated driving application) under supervision of a dataflow management unit 304 coordinating any data transfer for the applications 303a to 330c with a communication unit 302 of the user's terminal.

A pQoS managing module 305 (particularly a cross MNO pQoS API) may also be present optionally in the user's terminal 301. This module translates QoS indications of different MNOs to a common pQoS format as described above. This module 305 typically receives input from QoS determining clients of each MNOs 306a to 306c. Modules, 306a to 306c may also be present optionally in the user's terminal.

The user's terminal 301 may also be configured to provide feedback 307 on QoS to other devices 310, 320, particularly when the user's terminal is not responsible for determining the cross MNO QoS/pQoS. Such feedback may indicate an actual QoS in relation to a pQoS or may directly indicate a delta between an actual QoS in relation to a pQoS.

The second component of the system is one or more servers/systems of different MNOs 310a to 310c. User terminals 301 exchange data with the one or more servers/systems of different MNOs 310a to 310c. Each MNO typically operates a radio communication network 311a to 311c and a core network 312a to 312c. In some instances an MNO may communicate 314 over a public or private network with a backend 320 responsible for managing user devices 301 using the available MNOs at given time instances. The backend 320 may be an automated driving control centre.

Each MNO may also comprise the cross-MNO pQoS module/API 313. The cross-MNO pQoS may be implemented at an MNO's side, that may be understood as an implementation by one or more of the following: a base station, a radio access network, a core network, the Internet global network. The examples indicated above may also be combined in a system.

Specifically, the core network may also comprise different devices, which may comprise the cross-MNO pQoS module/API. Such devices/functions of the core network may be one or more of: a Mobility Management Entity, MME; a Serving Gateway, SGW; a Packet Data Network Gateway, PDN GW; an Access and Mobility Management Function, AMF; a Session Management Function, SMF; a Policy Control Function, PCF; a Network Exposure Function, NEF; or similar.

Similarly as a user's terminal 301, the MNO 310a may also be configured to provide feedback 307 on QoS to other devices 301, 320, particularly when the MNO 310a is not responsible for determining the cross MNO QoS/pQoS. Such feedback may indicate an actual QoS in relation to a pQoS or may directly indicate a delta between an actual QoS in relation to a pQoS.

The last component of the system is the backend 320. Typically the backend 320 comprises counterparts of the components present in a user's terminal 301.

The backend 320 executes one or more applications 322a to 322c (such as a tele-operated driving application) under supervision of a dataflow management unit 323 coordinating data transfers for the applications 322a to 322c with a communication unit 321 of the backend 320.

A pQoS managing module 324 (particularly a cross MNO pQoS API) may also be present optionally in the backend 320. This module translates QoS indications of different MNOs to a common pQoS format as described above. This module 324 typically receives input from QoS determining clients of each MNOs 325a to 325c. The modules 325a to 325c may also be present optionally in the user's terminal.

Similarly as a user's terminal 301, the backend 320 may also be configured to provide feedback 325 on QoS to other devices 301, 310a-c, particularly when the backend 320 is not responsible for determining the cross MNO QoS/pQoS. Such feedback may indicate an actual QoS in relation to a pQoS or may directly indicate a delta between an actually experienced QoS in relation to a pQoS.

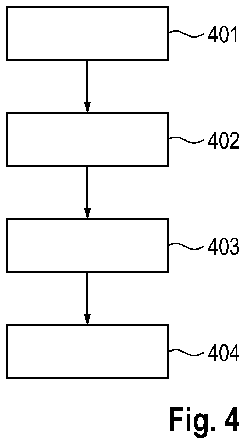

Figure 4 illustrates a block diagram of the method according to the present disclosure. In step 401 a pQoS managing module receives a first QoS indication from a first mobile network operator, MNO, and at step 402 the pQoS managing module receives a second QoS indication from a second MNO.

The first QoS and the second QoS are defined according to different QoS models and the first QoS and the second QoS concern the same receiver/terminal.

Subsequently, at step 403 the pQoS managing module executes an action of translating the first QoS and the second QoS to a uniform format of the output QoS.

For example the output is a translated first QoS and a translated second QoS both according to the uniform format of the output QoS.

Optionally, at step 404 the translated first QoS and the translated second QoS are provided to the receiver/terminal and/or to a backend.

### Reference Signs

- 101: pQoS Model 1
- 102: pQoS Model 1
- 103: pQoS output 1
- 103a: pQoS output 1 / Metric 1
- 103b: pQoS output 1 / Metric 2
- 103b: pQoS output 1 / Metric 3
- 104: pQoS output 2
- 104a: pQoS output 2 / Metric 4
- 104b: pQoS output 2 / Metric 5
- 105: translation/mapping of pQoSs
- 106: pQoS common report / Metric 6
- 107: pQoS common report / Metric 7
- 108: pQoS common report
- 301: user's terminal
- 302: Communication circuit/unit
- 303a: Application 1
- 303b: Application 2
- 303c: Application X
- 304: Dataflow management unit
- 305: pQoS managing module (cross-MNO pQoS API)
- 306a: pQoS client MNO 1
- 306b: pQoS client MNO 2
- 306c: pQoS client MNO X
- 307: feedback
- 310a: mobile network operator, MNO 1
- 310b: mobile network operator, MNO 2
- 310c: mobile network operator, MNO X
- 311a: Radio Access Network, MNO 1
- 311b: Radio Access Network, MNO 2
- 311c: Radio Access Network, MNO X
- 312a: Core network MNO 1
- 312b: Core network MNO 2
- 312c: Core network MNO X
- 313: pQoS managing module (cross-MNO pQoS API)
- 314: Public/private network
- 320: Backend
- 321: Communication circuit
- 322a: Application 1
- 322b: Application 2
- 322c: Application X
- 323: Dataflow management unit
- 324: pQoS managing module (cross-MNO pQoS API)
- 325a: pQoS client MNO 1
- 325b: pQoS client MNO 2
- 325c: pQoS client MNO X
- 401: Receive a first QoS indication from a first MNO
- 402: Receive a first QoS indication from a second MNO
- 403: Translate the first QoS and the second QoS to a uniform format of the output QoS
- 404: Provide the translated first QoS and the translated second QoS to the receiver and/or to a backend

## Claims

1. A method for determining an effective quality of service, QoS, in mobile communication, the method comprising the steps of:
receiving (401) a first QoS indication from a first mobile network operator, MNO (310a to 310c),
receiving (402) a second QoS indication from a second MNO (310a to 310c),
translating (403) the first QoS and the second QoS to a uniform format of the QoS,
wherein the first QoS and the second QoS are defined according to different QoS models,
wherein the first QoS and the second QoS concern the same terminal (301).

2. The method according to claim 1, wherein QoS is a predictive QoS.

3. The method according to claim 1 or 2, wherein the uniform format of the QoS is terminal-dependent.

4. The method according to claim 1 or 2, wherein the uniform format of the QoS is usage-scenario-dependent.

5. The method according to claim 2, wherein the translating process is learned by receiving from the terminal feedback including indication of a delta between the pQoS and an actual QoS for each of the first MNO (310a to 310c) and the second MNO (310a to 310c).

6. The method according to claim 2, wherein the translating process is learned by analyzing correlation between a feature of the first pQoS and a feature of the second pQoS.

7. The method according to claim 2, wherein the translating process is learned by executing one or more test sequences using the first MNO (310a to 310c) and the second MNO (310a to 310c) and analyzing correlation between a feature of the first pQoS and a feature of the second pQoS.

8. The method according to claim 6 or 7, wherein said correlation is based on determining a first measured service value for the feature of the first pQoS and a second measured service value for the feature of the second pQoS and correlating the feature of the first pQoS and the feature of the second pQoS according to a ratio between the first measured service value and the second measured service value,
wherein the first measured service value and the second measured service value are of the same type.

9. The method according to any of claims 1 to 8, wherein the QoS is qualitative.

10. The method according to any of claims 1 to 8, wherein the QoS is quantitative.

11. The method according to any of claims 1 to 10, wherein the translated first pQoS and the translated second pQoS are provided to the terminal (301).

12. The method according to any of claims 1 to 10, wherein the translated first pQoS and the translated second pQoS are provided to a backend (320).

13. The method according to any of claims 1 to 12, wherein the first MNO (310a to 310c) and the second MNO (310a to 310c) operate heterogeneous networks.

14. The method according to any of claims 1 to 13, wherein the QoS model depends on QoS determination method and/or QoS reported one or more indications.

15. The method according to any of claims 1 to 14, the method further comprising a step of selecting the first MNO (310a to 310c) or the second MNO (310a to 310c) to provide a service depending on the translated first pQoS and the translated second pQoS or switching between the first MNO (310a to 310c) or the second MNO (310a to 310c) depending on the translated first pQoS and the translated second pQoS.
